(19) Europäisches Patentamt
European Patent Office
Office européen des brevets

(11) Veröffentlichungsnummer: **0 093 306**
**B1**

(12) # EUROPÄISCHE PATENTSCHRIFT

(45) Veröffentlichungstag der Patentschrift: **24.09.86**

(51) Int. Cl.[4]: **C 09 B 29/036** // D06P1/18, C09B27/00

(21) Anmeldenummer: **83103747.8**

(22) Anmeldetag: **18.04.83**

(54) **Verfahren zur Herstellung von Azoverbindungen und neue Azoverbindungen.**

(30) Priorität: **29.04.82 DE 3215877**
**03.03.83 DE 3307508**

(43) Veröffentlichungstag der Anmeldung:
**09.11.83 Patentblatt 83/45**

(45) Bekanntmachung des Hinweises auf die Patenterteilung:
**24.09.86 Patentblatt 86/39**

(84) Benannte Vertragsstaaten:
**CH DE FR GB LI**

(56) Entgegenhaltungen:
**EP-A-0 073 463**
**EP-A-0 074 515**
**FR-A-2 121 048**
**US-A-3 083 195**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Lorenz, Manfred, Dr., Roggendorfstrasse 51, D-5000 Köln 80 (DE)**
Erfinder: **Schündehütte, Karl Heinz, Prof. Dr., Klief 75, D-5090 Leverkusen 3 (DE)**
Erfinder: **Bornatsch, Wolfgang, Dr., Baldurstrasse 21, D-5000 Köln 91 (DE)**

**EP 0 093 306 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Verfahren zur Herstellung von Azoverbindungen die in Form ihrer freien Säure der Formel

D-N=N-A (I)

entsprechen, wobei A ≠ D ist und

A den Rest einer Kupplungskomponente und D einen Rest, der in einer seiner tautomeren Formen den Formeln

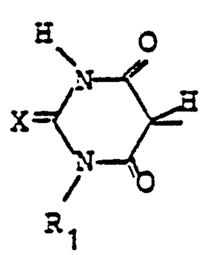 (II) oder 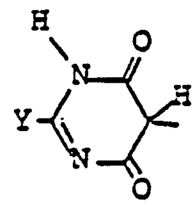

entspricht, bezeichen, das dadurch gekennzeichnet ist, daß man Verbindungen, die in einer ihrer tautomeren Formen den Formeln

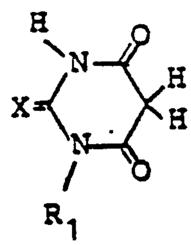 (IV) oder 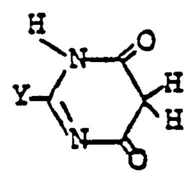 (V)

entsprechen, unter Zusatz von mindestens einem äquivalent einer Base pro Mol Verbindung der Formel IV oder V bei einem pH-Wert ⩾ 7 in einen wasserhaltigen Milieu mit wenigstens

$$\frac{1}{n}$$

Mol einer Verbindung der Formel

$$R_2 - (SO_2N_3)_n \qquad (VI)$$

unter Azogruppenübertragung zu Diazoverbindungen umsetzt, die in Form ihrer freien Säure der Formel

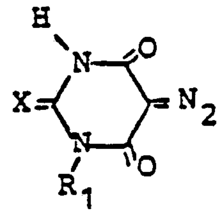 (VII) oder 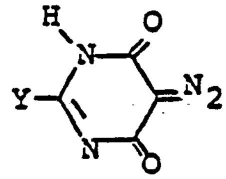 (VIII)

entsprechen, und man diese anschließend ohne Zwischenisolierung mit Kupplungskomponenten der Formel H-A zu Azoverbindungen der Formel I umsetzt.

Naturgemäß kann man auf die angegebene Weise auch zu Salzen und Komplexen der Verbindungen der Formel I gelangen.

Das Verfahren der Azogruppenübertragung wird vorzugsweise bei 0 - 100°C, besonders bevorzugt bei 10 - 80°C durchgeführt.

Vorzugsweise führt man das erfindungsgemäße Verfahren unter Zusatz von 1 - 2,9, bevorzugt 1 - 2,5, äquivalent der Base durch.

In den vorstehenden Formeln bezeichnen:

X O, =N-CN oder = $NR_3$,

Y $R_4$, einen heterocyclischen Rest oder einen Rest

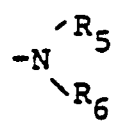

und

$R_1$ Wasserstoff, Alkyl, Cycloalkyl, Aryl oder Aralkyl, wobei die für $R_1$ genannten Kohlenwasserstoffreste z.B. durch -OH, Halogen, bevorzugt F, Cl, Br, $C_1$-$C_6$-Alkyl, $C_1$-$C_6$-Alkoxy, $NO_2$, -CN

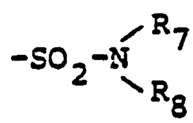 , 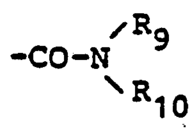

substituiert sein können.

$R_4$, $R_6$ haben die vorstehend für $R_1$ genannten Bedeutungen.

$R_3$, $R_5$ haben die für $R_1$ angegebenen Bedeutungen und können weiterhin für einen Acylrest, insbesondere

einen Rest $R_{11}$-CO- oder $R_{12}$-$SO_2$ stehen.

$R_7$, $R_5$, $R_9$, $R_{10}$ stehen für Wasserstoff, Alkyl, Cycloalkyl, Aryl oder Aralkyl, wobei die genannten Kohlenwasserstoffreste z.B. durch -OH, Halogen, bevorzugt F, Cl, Br, $C_1$-$C_6$-Alkyl, $C_1$-$C_6$-Alkoxy, -$NO_2$, -CN substituiert sein können; die Reste $R_7$,$R_8$ bzw. $R_9$,$R_{10}$ können auch gemeinsam mit dem N-Atom einen fünf- oder sechsgliedrigen heterocyclischen Rest bilden.

$R_{11}$ steht für Wasserstoff, Amino, Arylamino, Alkyl, Cycloalkyl, Aryl oder Aralkyl, wobei die Kohlenwasserstoffreste z.B. durch -OH, Halogen, bevorzugt F, Cl, Br, $C_1$-$C_6$-Alkyl, $C_1$-$C_6$-Alkoxy, -$NO_2$, -CN substituiert sein können.

$R_{12}$ steht für Aryl, z.B. Phenyl oder Napthyl, das beispielsweise durch -OH, Halogen, bevorzugt F, Cl, Br, $C_1$-$C_6$-Alkyl, $C_1$-$C_6$-Alkoxy, -$NO_2$, -CN substituiert sein kann.

$R_2$ steht für einen Alkylrest oder einen Arylrest, die beispielsweise durch $C_1$-$C_6$-Alkyl, $C_1$-$C_6$-Alkoxy, Halogen wie F, Cl, Br, -$NO_2$, -CN, -COOH oder -$SO_3H$ substituiert sein können.

Bevorzugt steht $R_2$ für Phenyl, Naphthyl, Biphenylyl, Oxybiphenylyl oder Sulfobiphenylyl, die beispielsweise wie für Aryl angegeben substituiert sein können;

n bezeichnet 1, 2 oder 3.

Alkyl ($R_1$, $R_3$, $R_4$, $R_5$, $R_6$, $R_7$, $R_8$, $R_9$, $R_{10}$, $R_{11}$, $R_{12}$) steht bevorzugt für $C_1$-$C_6$-Alkyl.

Alkyl ($R_2$) steht bevorzugt für $C_1$-$C_{20}$-Alkyl, besonders bevorzugt für $C_1$-$C_6$-Alkyl.

Cycloalkyl ($R_1$,$R_3$,$R_4$, $R_5$, $R_6$,$R_7$, $R_8$, $R_9$, $R_{10}$, $R_{11}$, $R_{12}$) steht bevorzugt für $C_3$-$C_7$-Cycloalkyl.

Aryl ($R_1$, $R_3$, $R_4$, $R_5$, $R_6$, $R_7$, $R_8$, $R_9$, $R_{10}$, $R_{11}$, $R_{12}$) steht bevorzugt für Phenyl oder Naphthyl.

Aralkyl ($R_1$, $R_3$, $R_4$, $R_5$, $R_6$, $R_7$, $R_8$, $R_9$, $R_{10}$, $R_{11}$, $R_{12}$) steht bevorzugt für Phenyl-$C_1$-$C_4$-alkyl.

Heterocyclischer Rest (Y) steht bevorzugt für einen 5- oder 6-gliedrigen heterocyclischen Rest, der 1, 2 oder 3 N-, O- und/oder S-Atome enthalten kann, besonders bevorzugt für einen Pyridylrest.

Bei den von $R_7$, $R_8$ bzw. $R_9$, $R_{10}$ gemeinsam mit dem N-Atom gegebenenfalls gebildeten heterocyclischen Ringen handelt es sich vorzugsweise um Piperidin- oder Morpholinringe.

Bei den Kupplungskomponenten HA handelt es sich um in der Chemie der Azofarbstoffe übliche Kupplungskomponenten, bevorzugt um methylenaktive Kupplungskomponenten, z.B. der Acetessigarylidreihe oder um heterocyclische Kupplungskomponenten, z.B. der Pyrimidin-, Pyridin-, Pyrazol- oder 2,4-Dihydroxychinolin-Reihe.

Geeignete Kupplungskomponenten sind z.B. die im folgenden als Beispiele für Verbindungen der Formeln (IV) und (V) aufgeführten Pyrimidinderivate.

Weitere geeignete Kupplungskomponenten der Pyrimidinreihe sind z.B: 4-amino-2,6-dihydroxypyrimidin, 2,4-Diamino-6-hydroxypyrimidin, 4,6-Diamino-2-hydroxypyrimidin, 4-Amino-2-cyanimino-6-hydroxypyrimidin, 2-phenyl-4-amino-6-hydroxypyrimidin, Cytosin, Orotsäure, 4-Carbamoyl-2,6-dihydroxypyrimidin, 4-Carboxy-6-hydroxy-2-phenylpyrimidin, 7-Hydroxy-5-methyl-s-triazolo-/1,5-a/pyrimidin, 2,5-Dimethyl-7-hydroxy-s-triazolo-/1,5-a/pyrimidin, 5,7-Dihydroxy-s-triazolo/1,5-a/pyrimidin, 5,7-Oihydroxy-2-methyl-s-triazolo/1,5-a/pyrimidin, 7-Amino-5-hydroxy-s-triazolo/1,5-a/pyrimidin, 7-Amino-5-hydroxy-2-methyl-s-triazolo/1,5-a/pyrimidin, 2,4-Dihydroxy-pyrimido/1,2-a/benzimidazol, 4-Amino-2-hydroxy-pyrimido/1,2-a/benzimidazol, 2H-Pyrimido/2,1-b/-benzothiazol-2,4(3H)-dion.

Geeignete Kupplungskomponenten der Acetessigarylidreihe sind z.B: Acetessigsäureanilid, -2-chlorani-lid, -2-methoxyanilid, -2-methylanilid, -2,4-dime-thylanilid, -2,5-dimethoxy-4-chloranilid, 5-Aceto-acetylaminobenzimidazolon-(2).

Geeignete Kupplungskomponenten der Pyridinreihe sind z.B: 2,6-Dihydroxypyridin, 2,6-Dihydroxy-4-methylpyridin, 2,6-Dihydroxy-3-cyano-4-methylpyridin, 2,6-Dihydroxy-3-carbamoyl-4-methylpyridin, 2,6-Dihydroxy-3-carboxymethyl-4-methylpyridin, 2,6-Dihydroxy-3-carboxyethyl-4-methylpyridin, 1,2-Dihydro-6-hydroxy-1,4-dimethyl-3-cyano-2-oxopyridin, 1,2-Dihydro-6-hydroxy-1-ethyl-4-methyl-3-cyano-2-oxopyridin, 2,4,6-Trihydroxy-3-carbamoylpyridin, 2,6-Dihydroxy-pyridin-4-carbonsäure, 2,6-Dihydroxy-pyridin-4-carbonamid, 2,4-Dihydroxy-pyridin-5-carbonamid, 1,2-Dihydro-hydroxy-1,4-dimethyl-2-oxo-pyridin.

Geeignete Kupplungskomponenten der Pyrazolreihe sind z.B: 3-Methyl-1-phenyl-5-pyrazolon, 1-(2-Chlorphenyl)-3-methyl-5-pyrazolon, 1-(4-Chlorphenyl)-3-methyl-5-pyrazolon, 1-(2,5-Dichlorphenyl)-3-methyl-5-pyrazolon, 3-Methyl-1-(4-methylphenyl)-5-pyrazolon, 3-Methyl-1-(4-nitrophenyl)-5-pyrazolon, 3-Methyl-1-phenyl-5-pyrazolonimid, 3-Methyl-5-pyrazolon, 1-Phenyl-5-oyrazolon-3-carbonsäure, 1-Phenyl-5-pyrazolon-3-carbonsäureamid, 1-(4-Chlorphenyl)-5-pyrazolon-3-carbonsäure, 1-(2,5-Dichlorphenyl)-5-pyrazolon-3-carbonsäure, 1-(3,4-Di-chlorphenyl)-5-pyrazolon-3-carbonsäure.

Weitere geeignete methylenaktive Kupplungskomponenten sind z.B: 2,4-Dihydroxychinolin, 1-Methyl-2,4-dihydroxychinolin, 4-Hydroxycumarin, 2-Acetonylbenzthiazol u.a.

Geeignete Verbindungen der Formeln IV und V sind z.B. Barbitursäure und ihre Derivate wie 2-Amino-4,6-dihydioxypyrimidin, 2-Cyanamino-4,6-dihydroxypyrimidin, 2-Ureido-4,6-dihydroxypyrimidin, 2-Acetylamino-4,6-dihydroxypyrimidin, 2-3enzoylamino-4,6-dihydroxypyrimidin, 2-Methylsulfonylamino-4,6-dihydroxypyrimidin. 2-Guan-idino-4,6-dihydroxypyrimidin, 2-phenylsulfonylamino-4,6-dihydroxypyrimidin, 2-Anilino-4,6-dihydroxypyrimidin; 2-(2-Chloranilino)-, 2-(3-Chloranilino)-, 2-(4-Chlor-amilino)-4,6-dihydroxypyrimidin; 2-(3,4-Dichloranilino)-, 2-(2,5-Dichloranilino)-4,6-dihydroxypyrimidin; 2-(2-Nitroanilino)-, 2-(3-Nitroanilino)-, 2-(4-Nitro-anilino)-4,6-dihydroxypyrimidin; 2-(2-Methoxyanilino)-, 2-(4-Methoxyanilino)-, 2-(2-Methylanilino)-, 2-(4-Methyl-anilino)-4,6-dihydroxypyrimidin; 2-(2,4-Dimethylanilino)-4,6-dihydroxypyrimidin; 2-Methylamino-, 2-Dimethylamino-4,6-dihydroxypyrimidin; 4,6-Dihydroxypyrimidin; 2-Butyl-, 2-Ethyl-, 2-Propyl-, 2-Hexyl-, 2-Benzyl-, 2-Phenyl-4,6-dihydroxypyrimidin; 1-Methyl-, 1-Ethyl-, 1-Benzyl-, 1-Phenyl-, 1-(4-Chlorphenyl)-, 1-(2-Chlorphenyl)-, 1-(3,4-Dichlorphenyl)-, 1-(4-Methylphenyl)-, 1-(2,4-Dimethyl-phenyl)-, 1-(3-Nitrophenyl)-barbitursäure.

Auf die vorstehend aufgeführten Kupplungskomponenten können in analoger Weise Diazogruppen übertragen werden, so daß die Verbindungen der Formeln IV und V in diesem Zusammenhang als Kupplungskomponenten betrachtet werden können.

Geeignete Verbindungen der Formel VI sind z.B: Benzolsulfonylazid, 3- oder 4-Chlorbenzolsulfonylazid, o-, m- oder p-Toluolsulfonylazid, 4-Methoxybenzolsul-fonylazid, 3-Nitrobenzolsulfonylazid, 3,3'-Sulfonylbisbenzolsulfonylazid, 4,4'-Oxybisbenzolsulfonylazid, 2,7-Dibenzofurandisulfonylazid, 1-Naphthalinsulfonyl-azid, 2-Naphthalinsulfonylazid.

Die Sulfonylazide der Formel (VI) können nach an sich bekannten Verfahren hergestellt werden, wie sie z.B. in Int. J. Sulfur Chem., Band 8, Nr. 1 (1973), S. 133ff. beschrieben sind.

So kann man z.B. unter geeigneten Bedingungen Sulfonylhalogenide mit Alkaliaziden umsetzen oder aber man geht von den entsprechenden Sulfonsäurehydraziden aus und setzt diese mit salpetriger Säure um. Die Sulfonylazide können nach oder bevorzugt ohne Zwischenisolierung weiter umgesetzt werden. Die Menge des für die Azogruppenübertragung eingesetzten Sulfonylazids sollte der bei einem quantitativen Verlauf der Reaktion erforderlichen Menge wenigstens entsprechen. Es ist jedoch zweckmäßig, einen gewissen überschuß an Azid einzusetzen, wobei im allgemeinen ein Überschuß von 0,5 bis 20 %, bevorzugt von 0,5 bis 10 %, für eine vollständige Umsetzung des eingesetzten Pyrimidins ausreicht. Als Zusätze geeignete Basen bei der Azogruppenübertragung, die einzeln oder in Mischung eingesetzt werden können, sind z.B. Alkali- und Erdalkalihydroxide, Alkali- und Erdalkalicarbonate, Alkali- und Erdalkalihydrogencarbonate, Erdalkalioxide, Ammoniak, Ammoniumcarbonat, Amine, z.B. Methyl-, Ethyl-, Isopropyl-, Butylamin, Dimethylamin, Trimethylamin, Diethylamin, Triethylamin, Ethanolamin, Diethanolamin, Triethanolamin, Piperidin und ähnliche geeignet. Die Menge und die Art dieser Basen richtet sich überwiegend nach der Acidität der entstehenden Diazoverbindungen. In Vorversuchen kann man gegebenenfalls feststellen, ab welchem MindestpH-Wert eine Weiterreaktion der Diazoverbindungen zu symmetrischen Azoverbindungen weitgehend unterbleibt und die Menge und Art der Basen entsprechend wählen, wobei selbstverständlich im Reaktionsansatz vorhandene zusätzliche Säuren berücksichtigt werden müssen. Der erforderliche Mindest-pH-Wert hängt von der Diazoverbindung ab und liegt z.B. bei einer stärker sauren Diazoverbindung wie z.B. 5-Diazobarbitursäure bei ca. 7 und bei einer weniger sauren wie z.B. 2-Cyanimino-5-diazobarbitursäure bei ca. 9.

Aus dem Gesagten ergibt sich, daß die Menge an Base der Menge an eingesetztem Pyrimidin wenigstens äquivalent sein sollte. Darüber hinaus kann es jedoch zweckmäßig sein, einen größeren Überschuß zu wählen, einmal um den erforderlichen Mindest-pH-Wert zu erreichen, zum anderen deswegen, weil während der Reaktion zusätzliche Säuren oder sauer wirkende Verbindungen entstehen können, z.B. durch eine teilweise Hydrolyse des Sulfonylazids. Ebenso wirkt das während der Reaktion zwangsweise als Nebenprodukt entstehende Sulfonamid namentlich bei höheren pH-Werten als Säure. Es ist dabei nicht erforderlich, die gesamte Basenmenge von Anfang an zuzugeben, gegebenenfalls kann ein Teil auch erst während der Reaktion zugefügt werden. Es ist andererseits nicht günstig, den Basenüberschuß zu groß zu wählen, besonders dann nicht, wenn es sich um eine starke Base, z.B. um ein Alkalihydroxid, handelt. Ein größerer überschuß an Alkalihydroxid, z.B. mehr als 3 Mol, führt wahrscheinlich zu einer vermehrten Hydrolyse des Sulfonylazids, so daß entweder ein Teil der Ausgangspyrimidine unumgesetzt bleibt oder aber ein größerer überschuß an Sulfonylazid erforderlich wird. Eine bevorzugte Ausführungsform des beanspruchten Verfahrens besteht somit darin, daß man die Umsetzung der Verbindungen der Formeln (IV) oder (V) mit Verbindungen der Formel (VI) unter Zusatz von 1 bis etwa 2,9 Mol, vorzugsweise 1 - 2,5 Mol Alkalihydroxid als Base vornimmt. Im einzelnen kann die Azogruppenübertragung so durchgeführt werden, daß man ein geeignetes Pyrimidin, ein Sulfonsäureazid und eine Base in einem wäßrigen Milieu zusammenbringt und einige Zeit rührt, gegebenenfalls unter Erhitzen auf Temperaturen zwischen 0 und 100°C, bevorzugt zwischen 10 und 80°C, bis kein Sulfonylazid und/oder Ausgangspyrimidin mehr nachweisbar ist. Die hierfür erforderliche Zeit kann zwischen ca. 24 Stunden bei tiefen und einigen Minuten bei hohen Temperaturen schwanken. Es kann zweckmäßig sein, zu dem Reaktionsansatz oberflächenaktive Substanzen hinzuzufügen wie. z.B. Netzmittel, Emulgatoren und Dispergiermittel, wobei sowohl anionische, kationische, nicht-ionische, amphotere und polymere Tenside alleim oder als Mischung in Frage kommen. Da die Sulfonylazide im Reaktionsmedium häufig nicht oder nur schwer löslich sind, kann hierdurch die Reaktion stark gefördert werden. Aus dem gleichen Grunde kann es nützlich sein, dem Ansatz wasserlösliche oder mit Wasser teilweise mischbare Lösungsmittel zuzufügen. Solche Lösungsmittel sind z.B. Methanol, Ethanol, Propylalkohol, Isopropylalkohol, n-Butanol, Isobutanol, Aceton, Methylethylketon, Cyclohexanon, Glykol, Methylglykol, Ethylglykol, Butylglykol, Glykoldimethylether, Diglykol, Diglykolmethylether, Diglykolethylether, Dimethylformamid, Dimethylsulfoxid, N-Methylpyrrolidon, Pyridin. Ein ähnlicher Effekt kann dadurch erzielt werden, daß man mit Wasser nicht mischbare Lösungsmittel zugibt, gegebenenfalls zusammen mit geeigneten Emulgatoren.

Die Diazoverbindungen der Formeln (VII) und (VIII) entstehen bei der Reaktion in hohen Ausbeuten und in hoher Reinheit. Man setzt sie ohne Zwischenisolierung mit geeigneten Kupplungskomponenten direkt weiter um. Die Kupplungsreaktion kann im einzelnen so durchgeführt werden, daß man die Diazoverbindung oder eine Lösung oder Suspension der Diazoverbindung, wie sie nach dem beanspruchten Verfahren entsteht, in einem geeigneten Milieu, bevorzugt einem wäßrigen Milieu, mit der Kupplungskomponente zusammenbringt und unter Rühren erhitzt bis die Reaktion beendet ist. Aus dem vorgehend gesagten ergibt sich, daß man dabei bevorzugt in einem pH-Bereich arbeitet, bei dem die Diazoverbindungen nicht mehr oder nicht mehr

vollständig in Form der weniger reaktiven Anionen vorliegen, d.h. im schwach sauren bis schwach alkalischen Bereich, z.B. zwischen pH 2 und pH 9.

Nach der üblichen Aufarbeitung erhält man Produkte, die z.B. als Pigmente geeignet sind.

Die Erfindung betrifft weiterhin Azoverbindungen, die in einer ihrer tautomeren Strukturen, in Form ihrer freien Säuren den Formeln IX und X entsprechen, sowie ihre Salze und Komplexe:

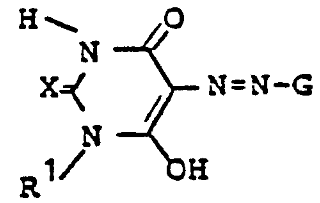

(IX)

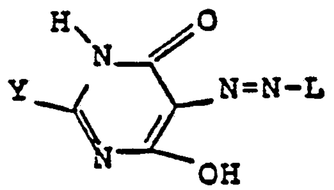

(X)

und die wie vorstehend beschrieben erhalten werden können. In der Formel IX und X bezeichnen:

G, L

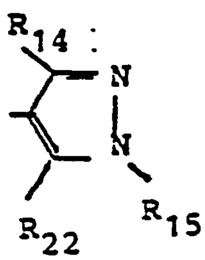

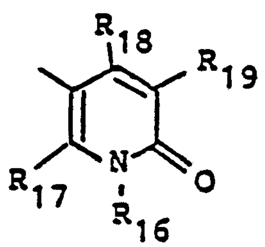

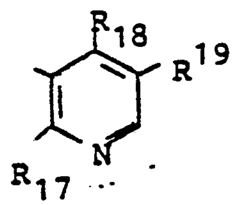

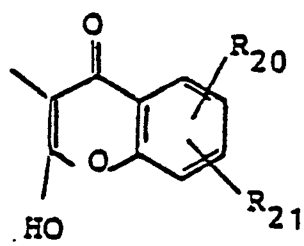

oder

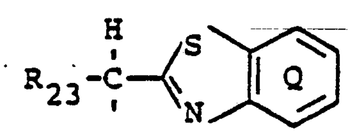

wobei

$R_1$,X,Y die zu Formel (I) angegebenen Bedeutungen haben,

$R_{14}$ Wasserstoff, Alkyl, Cycloalkyl, Aryl, Aralkyl, wobei die genannten Kohlenwasserstoffreste substituiert sein konnen, Amino, -COOH, Alkoxycarbonyl, $-CONH_2$, $R_{11}$-CO-NH- oder $R_{12}$-$SO_2$-NH-, wobei $R_{11}$, $R_{12}$, die zu

Formel (I) angegebenen Bedeutungen haben,

$R_{15}$ Wasserstoff, Alkyl, Cycloalkyl, Aryl, Aralkyl, wobei die genannten Kohlenwasserstoffreste substituiert sein können,

$R_{16}$ Wasserstoff, Alkyl, Cycloalkyl, Aryl, Aralkyl, wobei die genannten Kohlenwasserstoffreste substituiert sein können,

$R_{17}$ -OH, Amino, -NHR', $-N(R')_2$, wobei

R' Alkyl, Cycloalkyl, Aryl, Aralkyl bedeuten, wobei die genannten Kohlenwasserstoffreste substituiert sein können,

$R_{18}$ Alkyl, Cycloalkyl, Aryl, Aralkyl, wobei die genannten Kohlenwasserstoffreste substituiert sein können, -COOH, $R_{17}$ oder $R_{19}$,

$R_{19}$ H, -CN, -COOH, $-CONH_2$, -CONHR', $-CON(R')_2$, 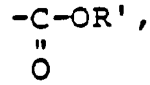,

-COR', $-SO_2R'$, Halogen und

$R_{20}$,$R_{21}$ Wasserstoff, Halogen, -OR', $-NH_2$, -NHR', $-N(R')_2$, Alkyl, Cycloalkyl, Aryl oder Aralkyl, wobei die genannten Kohlenwasserstoffreste substituiert sein können,

$R_{22}$ -OH, $-NH_2$ oder Acylamino,

$R_{23}$ $-COCH_3$, $-CONH_2$, -CN, -COOH oder -COO-$C_1$-$C_6$-alkyl bezeichnen und der mit Q bezeichnete Ring substituiert sein kann.

In den Formeln (IX) und (X) bezeichnen:

Alkyl, vorzugsweise $C_1$-$C_{12}$-Alkyl, besonders bevorzugt $C_1$-$C_6$-Alkyl; Cycloalkyl vorzugsweise $C_3$-$C_8$-Cycloalkyl, besonders bevorzugt Cyclopentyl, Cyclohexyl; Aralkyl vorzugsweise Phenyl-$C_1$-$C_6$-alkyl und Naphthyl-$C_1$-$C_6$-alkyl, besonders bevorzugt Benzyl und Phenethyl; Aryl vorzugsweise Phenyl und Naphthyl; Halogen vorzugsweise F, Cl und Br. Die Alkyl-, Aryl-, Cycloalkyl- und Aralkylreste der Formeln (IX) und (X) können z.B. durch -OH, Halogen, vorzugsweise F, Cl, Br, $C_1$-$C_6$-Alkyl, $C_1$-$C_6$-Alkoxy, $C_1$-$C_6$-Alkylthio, $-NO_2$, -CN,

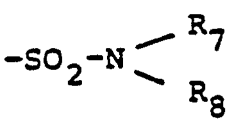 , $R_{11}$-CO-NH-, 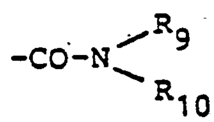 ,

$-NH_2-SO_2-R_{12}$,

wobei $R_7$, $R_8$, $R_9$, $R_{10}$, $R_{11}$ und $R_{12}$ die zu Formel (I) angegebenen Bedeutungen haben, substituiert sein.

Bei den Verbindungen der Formeln (IX) und (X) steht Y bevorzugt für Hydroxy, Amino, Cyanamino, Ureido, Guanidino, $C_1$-$C_4$-Alkylcarbonylamino, insbesondere Acetylamino, Benzoylanino, das im Phenylrest z.B. durch Chlor, Brom, Nitro, $C_1$-$C_6$-Alkoxy, insbesondere Methoxy, $C_1$-$C_6$-Alkyl, insbesondere Methyl, substituiert sein kann, $C_1$-$C_6$-Alkyl-sulfonylamino, insbesondere Methylsulfonylamino, Phenylsulfonylamino, das im Phenylrest z.B. durch Chlor, Brom, Nitro, $C_1$-$C_4$-Alkoxy, insbesondere Methoxy, $C_1$-$C_6$-Alkyl, insbesondere Methyl, substituiert sein kann, $C_1$-$C_6$-Alkylamino, insbesondere Methylamino, Di-($C_1$-$C_6$-Alkyl)-amino, insbesondere Dimethylamino, Phenylamino, das im Phenylrest z.B. durch Chlor, Brom, Nitro, $C_1$-$C_6$-Alkoxy, insbesondere Methoxy, $C_1$-$C_6$-Alkyl, insbesondere Methyl, substituiert sein kann.

X entspricht in seinen Vorzugsbedeutungen den vorstehend genannten Y-Resten und ist aus ihnen durch Abstraktion eines H-Atoms aus der -OH oder -N-H-Gruppierung herleitbar.

Y steht weiterhin bevorzugt für $C_1$-$C_6$-Alkyl oder Phenyl und Benzyl, die z.B. durch Chlor, Brom, Nitro, $C_1$-$C_6$-Alkoxy, insbesondere Methoxy, $C_1$-$C_6$-AlkYl, insbesondere Methyl, substituiert sein können.

$R_1$ steht bevorzugt für Wasserstoff, $C_1$-$C_6$-Alkyl, Phenyl, das durch Chlor, Brom, Nitro, $C_1$-$C_6$-Alkoxy, insbesondere Methoxy und $C_1$-$C_6$-Alkyl, insbesondere Methyl, substituiert sein kann, sowie Benzyl, das im Phenylrest durch Chlor, Brom, Nitro, $C_1$-$C_6$-Alkoxy, insbesondere Methoxy und $C_1$-$C_6$-Alkyl, insbesondere Methyl substituiert sein kann.

$R_{16}$ steht bevorzugt für Wasserstoff, $C_1$-$C_6$-Alkyl, Hydroxyethyl, $C_1$-$C_6$-Alkoxyethyl, -NH-($C_1$-$C_6$-Alkyl)-O-ethylcarbamat, Phenyl oder Naphthyl, die z.B. durch Chlor, Brom, Nitro, $C_1$-$C_6$-Alkyl, $C_1$-$C_6$-Alkoxy substituiert sein können, $C_3$-$C_8$-Cycloalkyl, insbesondere Cyclopentyl und Cyclohexyl.

$R_{17}$ steht bevorzugt für Hydroxy, Di-($C_1$-$C_6$-alkyl)-amino, $C_1$-$C_6$-Alkylamino, β-Hydroxyethyl und β-$C_1$-$C_6$-

Alkoxyethyl.

$R_{18}$ steht bevorzugt für Wasserstoff, Hydroxy, Di-($C_1$-$C_6$-alkyl)-amino, $C_1$-$C_6$-Alkylamino, β-Hydroxyethyl, β-$C_1$-$C_6$-Alkoxyethyl, $C_1$-$C_6$-Alkyl, Carboxy, Cyan, Carbamoyl, $C_1$-$C_6$-Alkylcarbonyl, Di-($C_1$-$C_6$-alkyl)-carbamoyl, $C_1$-$C_6$-Alkoxycarbonyl, Acetyl, Methylsulfonyl, Chlor, Brom.

$R_{19}$ steht bevorzugt für Wasserstoff, Cyan, Carboxy, Carbamoyl, $C_1$-$C_6$-Alkylcarbamoyl, Di-($C_1$-$C_6$-alkyl)-carbamoyl, $C_1$-$C_6$-Alkoxycarbonyl, Acetyl, Methylsulfonyl, Chlor, Brom.

$R_{16}$ steht besonders bevorzugt für Wasserstoff, $C_1$-$C_6$-Alkyl, Phenyl oder Naphthyl, die z.B. durch Chlor, Brom, Nitro, $C_1$-$C_6$-Alkyl, $C_1$-$C_6$-Alkoxy substituiert sein können.

$R_{17}$ steht besonders bevorzugt für Hydroxy und $C_1$-$C_6$-Alkylamino.

$R_{18}$ steht besonders bevorzugt für Hydroxy, $C_1$-$C_6$-Alkyl-amino,

$R_{19}$ steht besonders bevorzugt für Wasserstoff, Cyan, Carbamoyl, Carboxy, $C_1$-$C_6$-Alkylcarbamoyl, Acetyl, Methylsulfonyl.

Weiterhin bevorzugt sind Verbindungen der Formeln IX und X, bei denen $R_{16}$ bis $R_{19}$ die in der folgenden Tabelle angegebenen Bedeutungen haben:

| $R_{16}$ | $R_{17}$ | $R_{18}$ | $R_{19}$ |
|---|---|---|---|
| $-CH_3$ | -OH | $-CH_3$ | -CN |
| H | -OH | $-CH_3$ | -CN |
| $C_1$-$C_6$-Alkyl | -NH-($C_1$-$C_6$-alkyl) | -NH-($C_1$-$C_6$-alkyl) | -CN |
| H | -OH | -COOH | H |
| H | -OH | $-CONH_2$ | H |
| H | -OH | -OH | $-CONH_2$ |
| 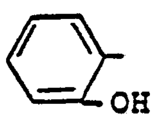 | -OH | $-CH_3$ | $-COCH_3$ |
| 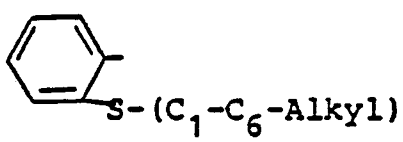 | -OH | $-CH_3$ | $-COCH_3$ |
| 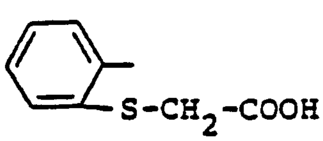 | -OH | $-CH_3$ | $-COCH_3$ |
| 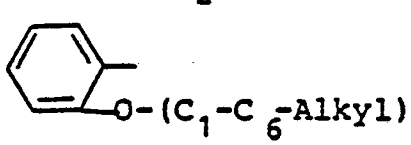 | -OH | $-CH_3$ | $-COCH_3$ |

$R_{20}$ bezeichnet bevorzugt Wasserstoff, Halogen, insbesondere F, Cl, Br, $C_1$-$C_6$-Alkoxy, Di-($C_1$-$C_6$-alkyl)-amino.

$R_{21}$ bezeichnet bevorzugt Wasserstoff oder $C_1$-$C_6$-Alkyl.

$R_{20}$ bezeichnet besonders bevorzugt Wasserstoff, Chlor, Methoxy, Dimethylamino.

$R_{21}$ bezeichnet besonders bevorzugt H oder Methyl.

$R_{22}$ steht bevorzugt für $-OH_1$, $NH_2$ $C_1$-$C_6$-Alkylcarbonyl amino, Benzoylamino oder Ureido.

Ganz besonders bevorzugt stehen $R_{20}$ und $R_{21}$ für Wasserstoff.

Ganz besonders bevorzugt sind weiterhin Verbindungen, die in einer ihrer tautomeren Strukturen, in Form ihrer freien Säuren der Formel

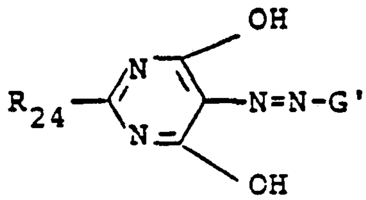

(XI)

entsprechen.

In Formel XI bezeichnen:

$R_{24}$ -OH oder -NHCN;

G'

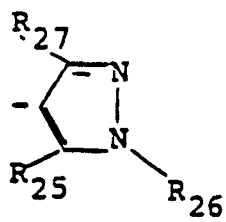

,

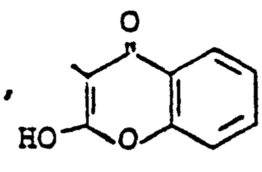

,

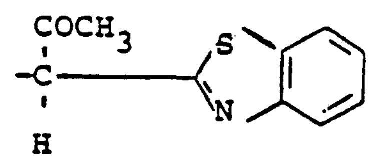

,

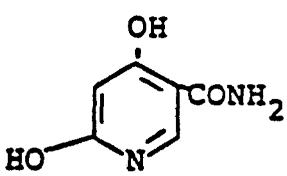

oder

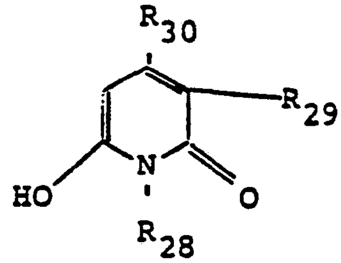

wobei

$R_{25}$ -OH oder $-NH_2$,

$R_{26}$, $R_{28}$ H, $C_1$-$C_4$-Alkyl insbesondere Methyl und Ethyl oder Phenyl, das durch 1-3 Substituenten aus der Reihe $C_1$-$C_4$-Alkyl insbesondere Methyl, Halogen insbesondere Cl, Br und F, Nitro, $C_1$-$C_4$-Alkoxy insbesondere Methoxy, -OH, substituiert sein kann;

$R_{27}$ -COOH, $-CONH_2$, Phenyl, $C_1$-$C_4$-Alkyl insbesondere Methyl;

$R_{29}$ H, $-CONH_2$, -COOH, -CN, $C_1$-$C_4$-Alkylcarbonyl und

$R_{30}$ -OH, $-CONH_2$, -CN, -COOH oder $C_1$-$C_4$-Alkyl insbesondere Methyl bezeichnen.

Die Verbindungen der Formeln IX - XI sind schwache bis starke Säuren, die mit geeigneten Kationen Salze oder Komplexe bilden, die sich von dem Mono-, Di-, Tri- oder Tetraanionen herleiten können.

Bevorzugte geeignete Kationen sind z.B. die Kationen, der Alkali- und Erdalkalimetalle wie die von Lithium, Natrium, Kalium, Magnesium, Calcium, Strontium und Barium, weiterhin Kationen von Eisen, Kobalt, Nickel, Cadmium, Mangan, Zink, Aluminium, Chrom, Kupfer.

Die Salze oder Komplexe können auf verschiedenen Wegen hergestellt werden. Sind z.B. während der Herstellungsreaktion geeignete Metallsalze zugegen, so können unmittelbar die Salze oder Komplexe der Verbindungen der Formeln IX - XI entstehen, die sich in Abhängigkeit vom pH-Wert von den verschiedenen Dissoziationsstufen der Verbindungen herleiten können. Man kann aber auch zuerst kuppeln und dann das Reaktionsprodukt unmittelbar oder aber gegebenenfalls nach Zwischenisolieren und Wiederanschlämmen in

POOR QUALITY

l umsetzen. Bei der Herstellung der Verbindungen können in Abhängigkeit von ormeln IX, X und dem pH-Wert entweder die undissozierten Azoverbindungen kalisalze, entstehen, die dann in einer doppelten Umsetzung mit Metallsalzen

g wird bevorzugt in einem Wasserhaltigen Milieu durchgeführt, wobei die oHmponenten zwischen mineralsauer und alkalisch liegen müssen. Die hen 0° und 100° betragen, bevorzugt 30°-100°C; die Reaktionszeiten zwischen inigen Minuten bei hohen Temperaturen. Darüber hinaus kann es zum Erzielen stechnischer Eigenschaften nützlich sein, das Produkt länger als für die zur rderliche Zeit zu erhitzen, gegebenenfalls auch unter Druck auf höhere

Komplexbildung Mischungen von Metallsalzen ein, so können je nach den :e oder Komplexe entstehen.
IX - XI bzw. ihre Salze und Komplexe lassen sich als Pigmente verwenden. genschaften können die Verbindungen in der Reaktionsmischung gekocht n Lösungsmitteln wie Toluol, Xylol, 1,2-Dichlorbenzol, Nitrobenzol, i-Butanol auf Temperaturen von ca. 80-150°C erhitzt werden. Auf diese Weise kann erzielen. Sie eignen sich insbesondere zum Pigmentieren von organischen lekularen organischen Materialien.
sondere zum Pigmentieren von Lacken aller Art, für die Herstellung von lerfarben, für die Massefärbung von synthetischen, halbsynthetischen oder offen, wie z.B. Polyvinylchlorid, Polystyrol, Polyamid, Polyethylen oder die Spinnfärbung von natürlichen, regenerierten oder künstlichen Fasern, carbonat-, Polyacrylnitril- oder Polyamidfasern, sowie zum Bedrucken von werden. Aus diesen Pigmenten können feinteilige, stabile, wäßrige weise für die Pigmentierung von Dispersions- und Anstrichfarben, für die ck von Textilien oder für die Spinnfärbung von Viskose brauchbar sind, genwart von nichtionogenen, anionischen oder kationischen Tensiden

durch große Farbstärke, hohes Deckvermögen, sehr gute Lichtechtheiten, ten und Temperaturstabilitüt aus.
sich auf die Herstellung von Farbstoffen durch Diazotierung von f Naphthylamin.
nd Komplexe der Azobarbitursäure bekannt.

id, 200 ml Wasser, 20 ml 10 N Salzsäure und 1,25 g eines äure mit Taurin werden 30 Minuten verrührt. Man fügt 60 g Eis hinzu und 34 ml einer wäßrigen Natriumnitritlösung mit einem Gehalt von 30 g Der Ansatz wird 30 Minuten gerührt, wobei man einen Nitritüberschuß man den Nitritüberschuß mit wenig Amidosulfonsäure und neutralisiert ml 10 N Natronlauge (pH 4-7). Man erhält eine Emulsion von

nulsion gibt man 18,1 g Barbitursäure und 30 ml 10 N Natronlauge. Die d diese Temperatur 2 Stunden gehalten. Man erhält eine Lösung bzw. obarbitursäure, die daneben noch Benzolsulfonamid enthält.
Suspension gibt man 22,5 g 2-Cyaniminobarbitursäure und 5 g igt danach den pH mit ca. 7,5 ml 10 N Natronlauge auf 5,5 bis 5,6. Nun d rührt 6 Stunden, wobei man den pH-Wert bei 5,5 und die Temperatur n des Natriumsalzes der Monocyaniminoazobarbitursäure.
gestellten Suspension wird mit konzentrierter Salzsäure auf pH 1 1 Stunde auf 95°C. Danach wird bei 90°C abgesaugt und mit 90°C Trocknen in einem Umlufttrockenschrank bei 70°C erhält man 47,3 g chen tautomeren Formen der folgenden Strukturformel entspricht:

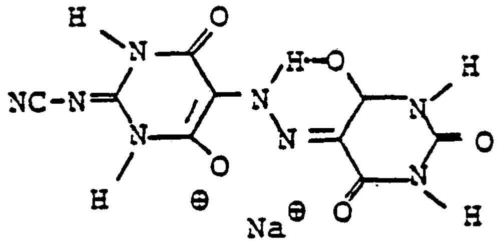

Die Verbindung enthält Kristallwasser, das bei schärferem Trocknen teilweise entfernt wird.
Analyse: (berechnet für $C_9H_5N_8O_5$ Na.$2H_2O$; MG 364,2)
ber: 29,7 % C 30,7 % N 6,3 % Na
gef: 30,6 % C* 30,6 % N 6,1 % Na
* Da die letzten Reste an Verunreinigungen (Dispergiermittel, überschüssige Kupplungskomponente, Benzolsulfonamid) nur schwer auszuwaschen sind, liegt der Kohlenstoffwert in der Regel etwas zu hoch.
Das IR-Spektrum in KBr (μ) zeigt drei intensive Banden bei 4,55; 6,15; 7,3.
Die Verbindung färbt Lacke und Kunststoffe in klaren orangen Tönen.

**Beispiel 2**

a) 26,3 g Benzolsulfonsäurehydrazid, 100 ml Wasser, 21 ml 10 N Salzsäure und 1,3 g Emulgator FD (Fettalkohol-Ethylenoxid-Additionsprodukt) werden 30 Minuten verrührt, 60 g Eis zugegeben und anschließend in ca. 30 Minuten eine Lösung von 10,5 g Natriumnitrit in 50 ml Wasser zugetropft. Der Ansatz wird 30 Minuten gerührt, anschließend der Nitritüberschuß mit wenig Amidosulfonsäure zerstört und die überschüssige Säure mit ca. 5 ml 10 N Natronlauge neutralisiert. Man erhält eine Emulsion von Benzolsulfonsäureazid.

b) Zu einer nach 2a) hergestellten Emulsion gibt man 40 ml 10 N Natronlauge und streut danach 21,6 g 2-Cyamiminobarbitursäure ein. Man erhitzt den Ansatz 3 Stunden auf 70°C, wobei der pH-Wert von anfangs ca. 13 bis auf ca. 10 absinkt. Man erhält eine Lösung bzw. Suspension von 2-Imino-5-diazobarbitursäure.

c) Zu einer nach 2b) hergestellten Suspension gibt man 22,2 g Cyanimino-4-imino-barbitursäure und 5 g Glutarsäure, stellt den pH-Wert mit 5 ml 10 N Salzsäure auf 5,5 und rührt 5 Stunden bei 95°C und pH 5,5. Danach stellt man den pH-Wert mit wenig Salzsäure auf 4, gibt 39 g $BaCl_2$. $2H_2O$ hinzu und hält noch 5 Stunden bei 95°C und pH 4. Isoliert man wie üblich, so erhält man 66,1 g eines Produktes dem in einer seiner tautomeren Formen die folgende wahrscheinliche Struktur zukommt:

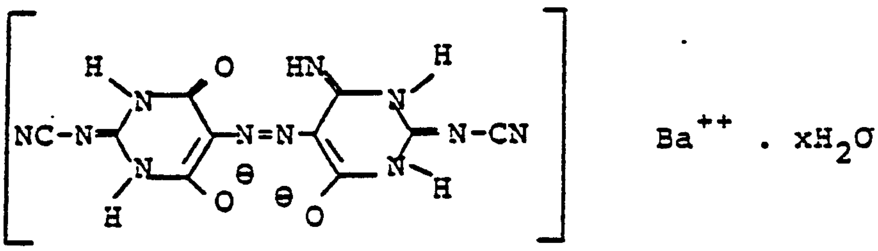

Analyse: (berechnet für $(C_{10}H_5N_{11}O_3)$Ba. $3H_2O$; MG: 518,6)
ber: 23,2 % C 29,7 % N 26,5 % Ba
gef: 24,0 % C 29,7 % N 24,2 % Ba
Die Verbindung färbt Alkydharzlacke in Bordeauxtönen.

**Beispiel 3**

Zu einer nach 1b) hergestellten Suspension des Natriumsalzes der Diazobarbitursäure gibt man 5 g Bernsteinsäure und 30 g 1-Phenyl-5-pyrazolon-3-carbonsäure, stellt mit 13 ml 10 N Natronlauge auf pH 5,5 und erhitzt 5 Stunden auf 95°C. Danach fügt man 39 g $BaCl_2$. $2H_2O$ hinzu und erhitzt noch 1 Stunde auf 95°C. Der pH-Wert wird danach mit Konzentrierter Salzsäure auf 4 herabgesetzt, eine weitere Stunde bei 95°C gerührt, abgesaugt und mit Wasser gewaschen. Nach dem Trocknen erhält man 70 g einer Verbindung der in einer ihrer möglichen tautomeren Formen die folgende Strukturformel zukommt:

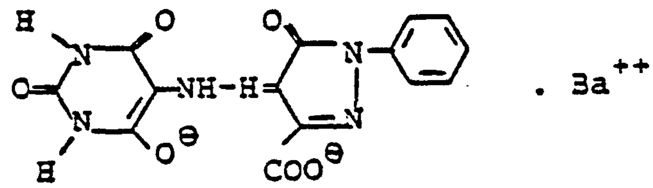

Die Verbindung färbt Alkydharzlacke in Bordeauxtönen.

**Beispiele 4 - 72**

Analog Beispiel 3 lassen sich bei verwendung der in der folgenden Tabelle angegebenen Diazo- und Kupplungskomponenten und unter Zusatz der angegebenen Molmenge an Metall in Form eines Wasserlöslichen Salzes die entsprechenden Azofarbstoffe in Form ihrer Salze herstellen.

Beisp. Nr Diazokomp. Kupplungskomp. Metall (Mol/Mol Farbstoff)

| Beisp. Nr. | Diazokomp. | Kupplungskomp. | Metall (Mol/Mol Farbstoff) |
|---|---|---|---|
| 4 | 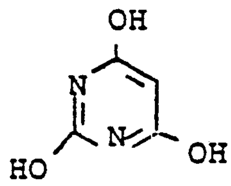 | 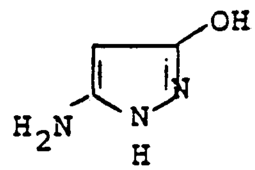 | Ni (1,0) |
| 5 | " | " | Cu (1,0) |
| 6 | " | 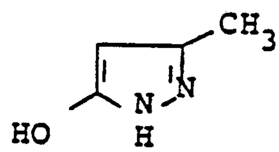 | Na (1,0) |
| 7 | " | " | Ca (1,0) |
| 8 | " | " | Ba (1,0) |
| 9 | " | " | Ni (1,0) |
| 10 | " | " | Cu (1,0) |
| 11 | " | " | Co (1,0) |
| 12 | " | 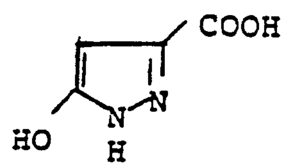 | Ca (1,0) |
| 13 | " | " | Ba (1,0) |
| 14 | " | " | Sr (1,0) |
| 15 | " | " | Zn (1,0) |
| 16 | " | " | Ni (1,5) |
| 17 | " | " | Mn (1,0) |
| 18 | " | 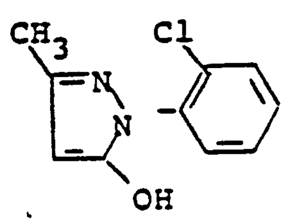 | Na (1,0) |

| Beisp. Nr. | Diazokomp. | Kupplungskomp. | Metall (Mol/Mol Farbstoff) |
|---|---|---|---|
| 19 | 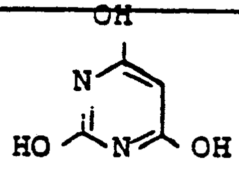 | 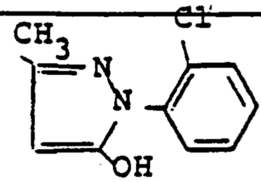 | Ca (0,5) |
| 20 | " | " | Ba (0,5) |
| 21 | " | 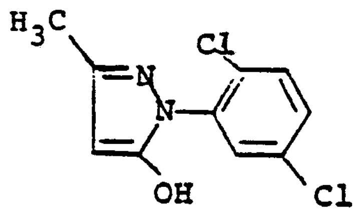 | Ca (0,5) |
| 22 | " | " | Ba (0,5) |
| 23 | " | " | Ni (1,0) |
| 24 | " | 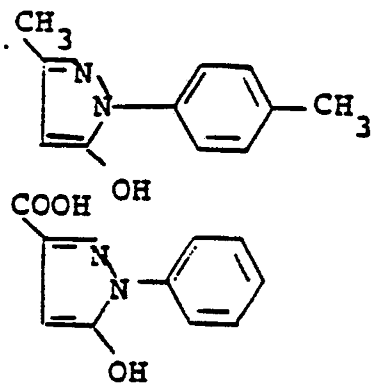 | Ba (0,5) |
| 25 | " | | Ca (1,0) |
| 26 | " | " | Ba (1,0) |
| 27 | " | " | Mn (1,0) |
| 28 | " | " | Ni (1,5) |
| 29 | " | 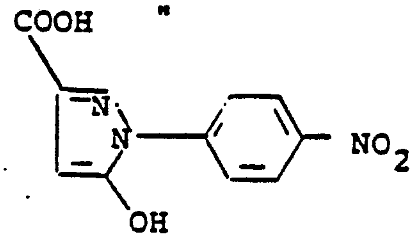 | Na (2,0) |
| 30 | " | " | Ca (1,0) |

| Beisp. Nr. | Diazokomp. | Kupplungskomp. | Metall (Mol/Mol Farbstoff) |
|---|---|---|---|
| 31 | 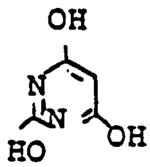 | 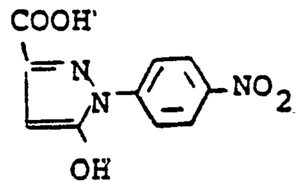 | Ba (1,0) |
| 32 | 〃 | 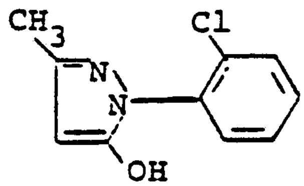 | Sr (1,0) |
| 33 | 〃 | 〃 | Ni (1,5) |
| 34 | 〃 | 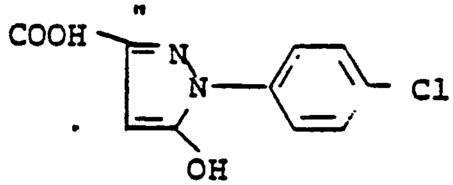 | Na (2,0) |
| 35 | 〃 | 〃 | Ca (1,0) |
| 36 | 〃 | 〃 | Ba (1,0) |
| 37 | 〃 | 〃 | Mn (1,0) |
| 38 | 〃 | 〃 | Ni (1,5) |
| 39 | 〃 | 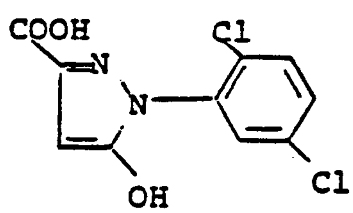 | Ca (1,0) |
| 40 | 〃 | 〃 | Sr (1,0) |
| 41 | 〃 | 〃 | Ba (1,0) |
| 42 | 〃 | 〃 | Mn (1,0) |
| 43 | 〃 | 〃 | Ni (1,5) |
| 44 | 〃 | 〃 | Zn (1,0) |

| Beisp. Nr. | Diazokomp. | Kupplungskomp. | Metall (Mol/Mol Farbstoff) |
|---|---|---|---|
| 45 | 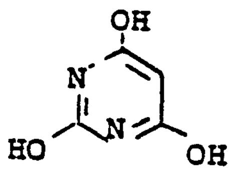 | 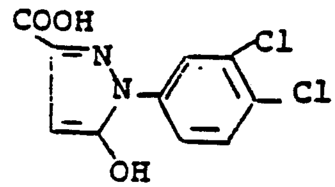 | Mg (1,0) |
| 46 | " | " | Ca (1,0) |
| 47 | " | " | Sr (1,0) |
| 48 | " | " | Ba (1,0) |
| 49 | " | " | Mn (1,0) |
| 50 | " | " | Ni (1,5) |
| 51 | " | " | Cu (1,5) |
| 52 | " | " | Co (1,5) |
| 53 | " | 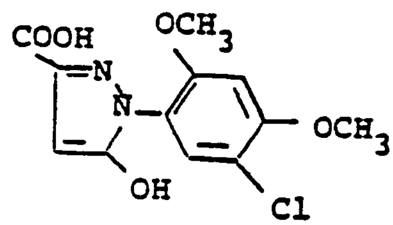 | Ca (1,0) |
| 54 | " | " | Ba (1,0) |
| 55 | " | 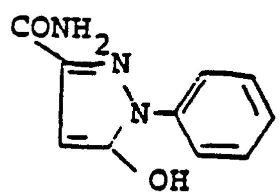 | Ba (1,0) |
| 56 | " | " | Sr (1,0) |
| 57 | " | " | Ni (1,0) |
| 58 | " | 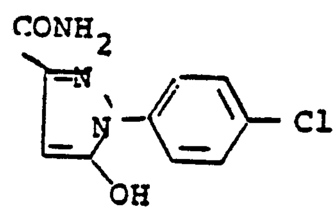 | Ca (0,5) |

| Beisp. Nr. | Diazokomp. | Kupplungskomp. | Metall (Mol/Mol Farbstoff) |
|---|---|---|---|
| 59 | 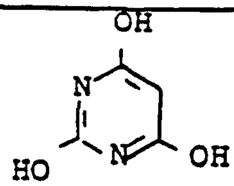 | 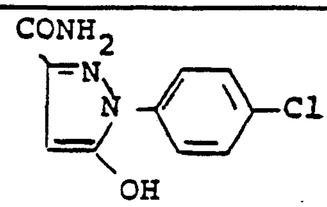 | Sr (0,5) |
| 60 | " | " | Ba (0,5) |
| 61 | " | " | Ni (1,0) |
| 62 | " | 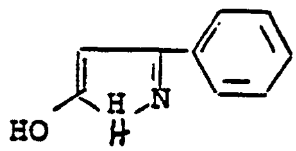 | Ba (0,5) |
| 63 | " | " | Ni (1,0) |
| 64 | 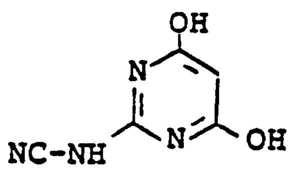 | 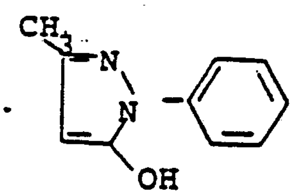 | Ca (0,5) |
| 65 | " | " | Ba (0,5) |
| 66 | " | 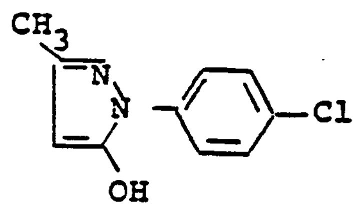 | Ba (0,5) |
| 67 | " | " | Sr (0,5) |
| 68 | " | " | Ni (1,0) |
| 69 | " | 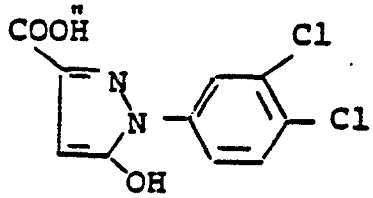 | Ca (1,0) |
| 70 | " | " | Sr (1,0) |
| 71 | " | " | Ba (1,0) |
| 72 | " | " | Ni (1,5) |

**Beispiel 73**

Zu einer nach Beispiel 1b) hergestellten Suspension des Natriumsalzes der Diazobarbitursäure gibt man bei 70°C 24,7 g 4-Hydroxycumarin und erhitzt 7 Stunden auf 70°C, wobei man den pH-Wert bei 7 hält. Der orangerote Farbstoff wird abgesaugt und mit 90°C heißem Wasser gewaschen und getrocknet. Man erhält 43,6 g eines Produktes der folgenden Strukturformel, wobei die Substanz naturgemäß auch in anderen tautomeren Formen vorliegen kann.

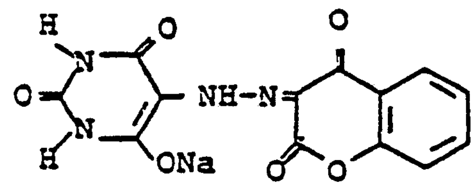

**Beispiel 74**

Zu einer nach Beispiel 2b) hergestellten Lösung von 2-Cyanimino-5-diazobarbitursäure gibt man 29 g 2-Acetonylbenzthiazol. Man bringt den Ansatz mit 5 bis 6 ml 10 N Salzsäure auf pH 5,5 und erhitzt 5 Stunden auf 70° C. Der ausgefallene Farbstoff wird abgesaugt und mit heißem Wasser neutral gewaschen. Nach dem Trocknen bei 70° C in Umluftschrank erhält man 45,1 g eines Farbstoffs der Weich-PVC in roten Tönen färbt und dem in einer der möglichen tautomeren Formen die folgende Struktur zukommt:

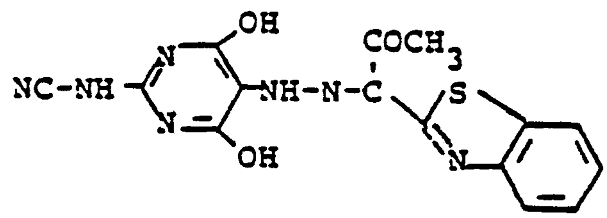

**Beispiel 75**

Zu einer nach Beispiel 2b) hergestellten Lösung von 2-Cyanimino-5-diazobarbitursäure gibt man 10 g Bernsteinsäure und 25,9 g 2,4,6-Trihydroxypyridin-3-carbonsäureamid, stellt mit 5 ml 10 N Salzsäure auf pH 5 bis 6 und erhitzt 3 Stunden auf 90° C. Anschließend fügt man zunächst 20 ml 10 N Salzsäure und danach 18,8 g $BaCl_2$. $2H_2O$ hinzu. Nach 15 Minuten erniedrigt man den pH-Wert mit 10 ml 10 N Salzsäure auf 1 und erhitzt noch 2 Stunden auf 95° C. Der Niederschlag wird abgesaugt, mit heißem Wasser gewaschen und bei 70° C im Umluftschrank getrocknet. Man erhält 51 g eines braunen Pigmentes, dem in einer seiner tautomeren Formen die folgende Struktur zukommt:

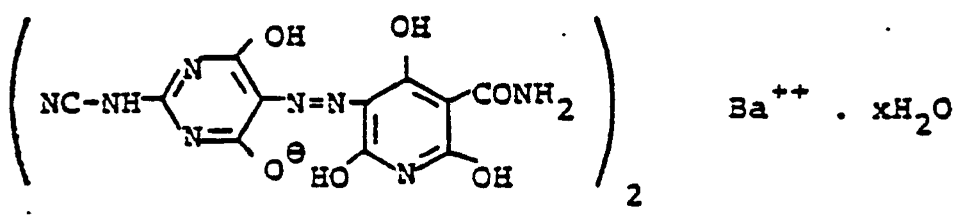

**Beispiele 76 - 85**

Analog Beispiel 75 lassen sich bei Verwendung der in der folgenden Tabelle angegebenen Diazo- und Kupplungskomponenten und unter Zusatz der angegebenen Menge an Barium in Form eines wasserlöslichen Salzes die entsprechenden Azofarbstoffe in Form ihrer Salze herstellen:

Beisp. Nr. Diazokomp. Kupplungskomp. Ba (Mol/Mol Farbstoff)

| Beisp. Nr. | Diazokomp. | Kupplungskomp. | Ba (Mol/Mol Farbstoff) |
|---|---|---|---|
| 76 | 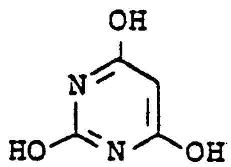 | 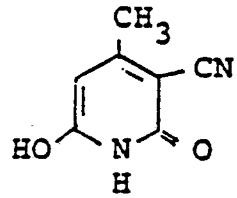 | 0,5 |
| 77 | " | 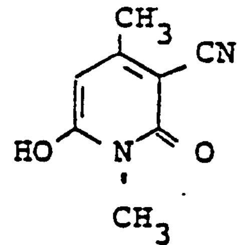 | 0,5 |
| 78 | " | 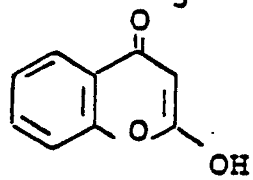 | 1,0 |
| 79 | " | 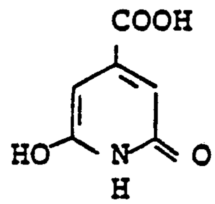 | 0,75 |
| 80 | " | 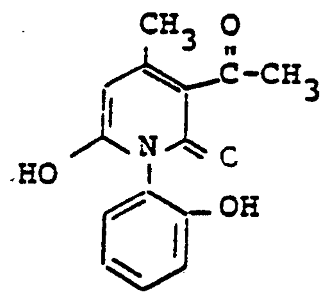 | 0,5 |

| Beisp. Nr. | Diazokomp. | Kupplungskomp. | Ba (Mol/Mol Farbstoff) |
|---|---|---|---|
| 81 | 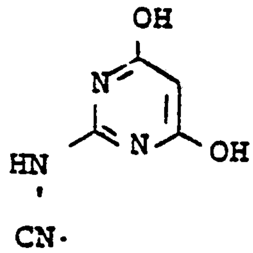 | 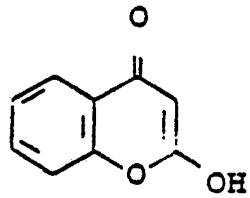 | 0,5 |
| 82 | " | 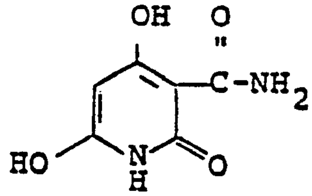 | 0,5 |
| 83 | " | 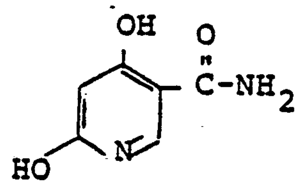 | 0,5 |
| 84 | " | 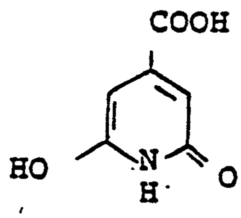 | 1,5 |
| 85 | " | 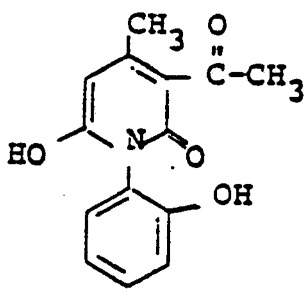 | 0,5 |

**Beispiel 86**

Zu einer nach Beispiel 1b hergestellten Lösung von 5-Diazo-barbitursäure gibt man 10 g Bernsteinsäure und 21,9 g 2,6-Dihydroxypyridin-4-carbonsäureamid, stellt mit 5 ml 10 N Salzsäure auf pH 6 und erhitzt 3 h auf 95°C. Anschließend fügt man 17 g Bernsteinsäure und 37,8 g $NiCl_2.6H_2O$ hinzu. Nach 10 Min. wird der pH mit 10 ml 10 Salzsäure auf 5,5 eingestellt und noch 3 h bei 95°C erhitzt. Der Niederschlag wird abgesaugt, mit heißen Wasser gewaschen und bei 70°C im Umluftschrank getrocknet. Man erhält 47 g braunes Pigmemt, dem in einer seiner tautomeren Formen die folgende Struktur zukommt:

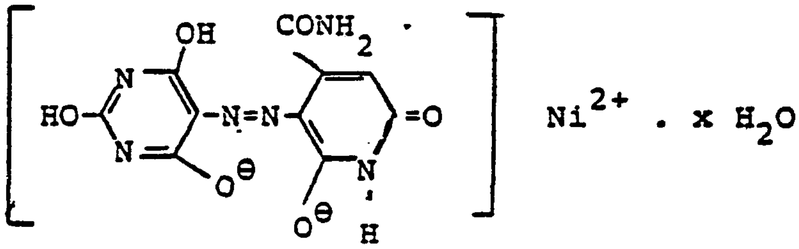

**Beispiele 87 - 99**

Analog Beispiel 86 lassen sich bei Verwendung der in der folgenden Tabelle angegebenen Diazo- und Kupplungskomponenten und unter Zusatz der angegebenen Menge an Nickel in Form eines wasserlöslichen Salzes die entsprechenden Azofarbstoffe in Form ihrer Salze herstellen:
Beisp. Nr. Diazokomp. Kupplungkomp. Ni (Mol/Mol Farbstoff)

| Beisp. Nr. | Diazokomp. | Kupplungskomp. | Ni (Mol/Mol Farbstoff) |
|---|---|---|---|
| 87 | 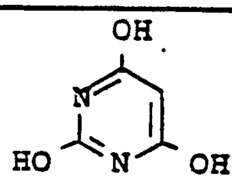 | 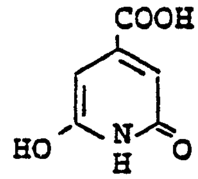 | 1,0 |
| 88 | " | 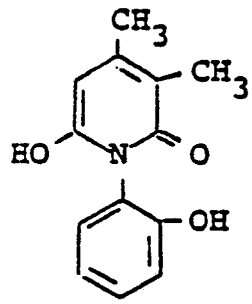 | 1,0 |
| 89 | " | 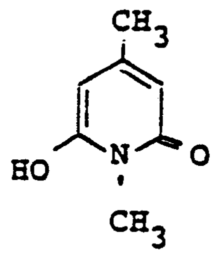 | 1,0 |
| 90 | " | 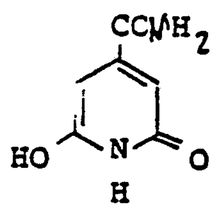 | 1,0 |
| 91 | " | 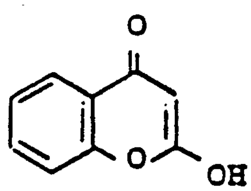 | 1,0 |

| Beisp. Nr. | Diazokomp. | Kupplungskomp. | Ni (Mol/Mol Farbstoff) |
|---|---|---|---|
| 92 | 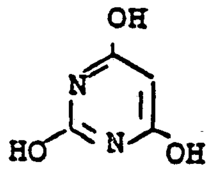 | 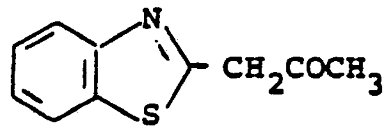 | 1,0 |
| 93 | 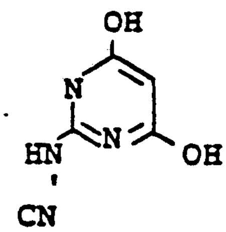 | 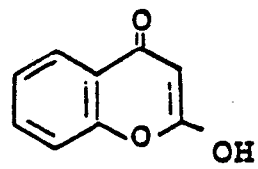 | 1,0 |
| 94 | " | 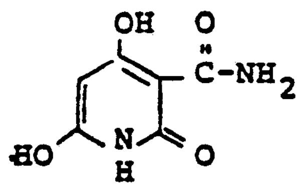 | 1,0 |
| 95 | " | 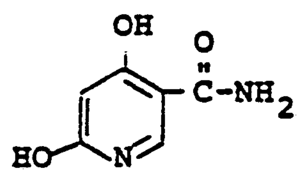 | 1,0 |
| 96 | " | 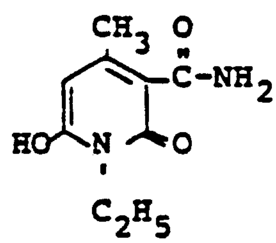 | 1,0 |
| 97 | " | 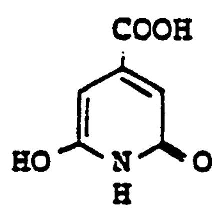 | 1,0 |

| Beisp. Nr. | Diazokomp. | Kupplungskomp. | Ni (Mol/Mol Farbstoff) |
|---|---|---|---|
| 98 | 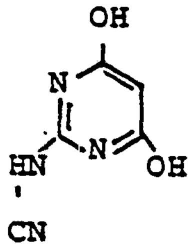 | 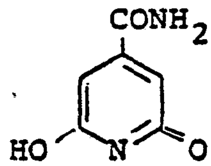 | 1,0 |
| 99 | " | 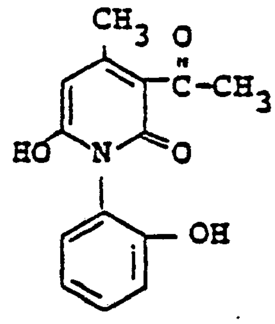 | 1,0 |

**Patentansprüche**

1) Verfahren zur Herstellung von Azoverbindungen, die in Form ihrer freien Säure der Formel
D-N=N-A (I)
entsprechen, wobei A = D ist und A den Rest einer Kupplungskomponente und D einen Rest, der in einer seiner tautomerem Formen den Formeln

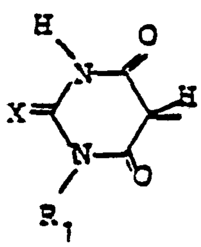 (II) oder 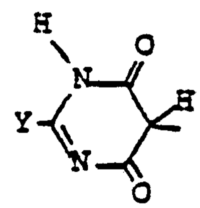 (III)

entspricht, bezeichnen, dadurch gekennzeichnet, daß man Verbindungen, die in einer ihrer tautomeren Formen den Formeln

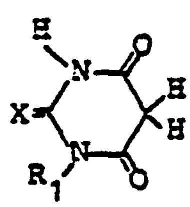 (IV) oder 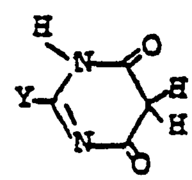 (V)

entsprechen, unter Zusatz von mindestens einem äquivalent einer Base pro Mol Verbindung der Formel (IV) oder (V) bei einem pH-Wert ⩾ 7 in einem wasserhaltigen Milieu mit wenigstens

$$\frac{1}{n}$$

Mol einer Verbindung der Formel

$$R_2 - (SO_2N_3)_n \quad (VI)$$

unter Diazogruppenübertragung zu Diazoverbindungen umsetzt, die in Form ihrer freien Säure der Formel

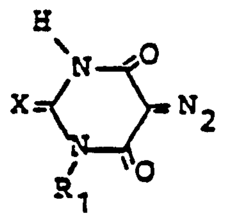 (VII) oder 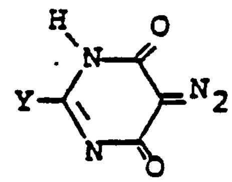 (VIII)

entsprechen, und man diese anschließend ohne Zwischenisolierung mit Kupplungskomponenten der Formel HA zu Azoverbindungen der Formel (I) umsetzt, wobei

X O, $=N\text{-}CN$ oder $=NR_3$,

Y $R_4$, einen heterocyclischen Rest oder einen Rest

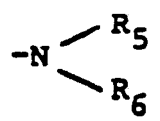

und

$R_1$ Wasserstoff, Alkyl, Cycloalkyl, Aryl oder Aralkyl, wobei die für $R_1$ genannten Kohlenwasserstoffreste substituiert sein können, bezeichnen;

$R_4$,$R_6$ die vorstehend für $R_1$ genannten Bedeutungen haben;

$R_3$,$R_5$ die für $R_1$ genannten Bedeutungen haben und weiterhin für einen Acylrest, insbesondere einen Rest $R_{11}$-CO- oder $R_{12}$-$SO_2$- stehen;

$R_2$ für einen Alkylrest oder einen Arylrest steht,

$R_{11}$ Wasserstoff, Amino, Arylamino, Alkyl, Cycloalkyl, Aryl oder Aralkyl, wobei die Kohlenwasserstoffreste z.B. durch -OH, Halogen, bevorzugt F, Cl, Br, $C_1$-$C_6$-Alkyl, $C_1$-$C_6$-Alkoxy, -$NO_2$, -CN substituiert sein können, und

$R_{12}$ Aryl, z.B. Phenyl oder Naphthyl, das beispielsweise durch -OH, Halogen, bevorzugt F, Cl, Br, $C_1$-$C_6$-Alkyl, $C_1$-$C_6$-Alkoxy, -$NO_2$, -CN-substituiert sein kann, bedeuten, und n 1, 2 oder 3 bezeichnet.

2) Verfahren gemäß Anspruch 1, dadurch gekennzeichnet, daß man als Kupplungskomponente HA eine Kupplungskomponente der Acetessigarylid-, Pyrimidin-, Pyridin-, Pyrazol- oder 2,4-Dihydroxychinolin-Reihe einsetzt.

3) Verfahren gemäß den Ansprüchen 1 und 2, dadurch gekennzeichnet, daß man 1-2,9 äquivalent Base zusetzt.

4) Verfahren gemäß den Ansprüchen 1 bis 3, dadurch gekennzeichnet, daß man das Azid der Formel (VI) in einem überschuß von 0,3 bis 20 %, bevorzugt von 0.5 bis 10 %, einsetzt.

5) Azoverbindungen, die in einer ihrer tautomeren Strukturen der Formeln IX nd X entsprechen

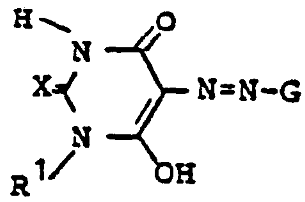

(IX)

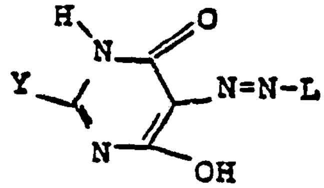

(X)

wobei
G, L für

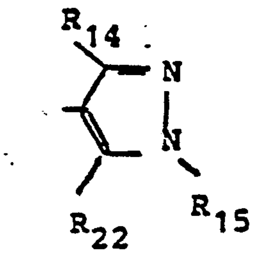

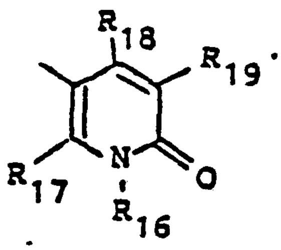

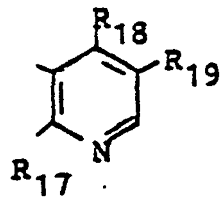

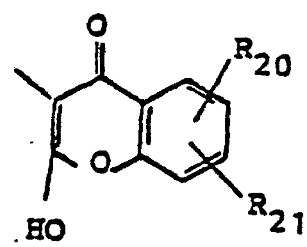

oder

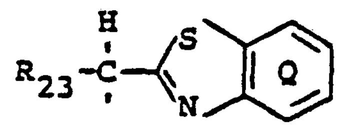

stehen, wobei weiterhin
$R_1$,X,Y die in Anspruch 1 angegebenen Bedeutungen haben,
$R_{14}$ Wasserstoff, Alkyl, Cycloalkyl, Aryl, Aralkyl, wobei die genannten Kohlenwasserstoffreste substituiert sein können, Amino, -COOH,-$CONH_2$, Alkoxycarbonyl, $R_{11}$-CO-NH- oder $R_{12}$-$SO_2$-NH-, wobei $R_{11}$, $R_{12}$ die zu Formel (I) angegebenen Bedeutungen haben,
$R_{15}$ Wasserstoff, Alkyl, Cycloalkyl, Aryl, Aralkyl, wobei die genannten Kohlenwasserstoffreste substituiert sein können,
$R_{16}$ Wasserstoff, Alkyl, Cycloalkyl, Aryl, Aralkyl, wobei die genannten Kohlenwasserstoffreste substituiert sein können,
$R_{17}$ -OH, Amino, -NHR', -$N(R')_2$, wobei
R' Alkyl, Cycloalkyl, Aryl, Aralkyl bedeuten, wobei die genannten Kohlenwasserstoffreste substituiert sein können,
$R_{18}$ Alkyl, Cycloalkyl, Aryl, Aralkyl, wobei die genannten Kohlenwasserstoffreste substituiert sein können, -COOH, $R_{17}$ oder $R_{19}$

$R_{19}$ H, -CN, -COOH, -$CONH_2$, -CONHR', -$CON(R')_2$, $-\underset{O}{\underset{\|}{C}}-OR'$, -COR', -$SO_2R'$, Halogen und

$R_{20}$,$R_{21}$ Wasserstoff, Halogen, -OR', -$NH_2$, -$N(R')_2$, -NHR-, Alkyl, Cycloalkyl, Aryl oder Aralkyl, wobei die genannten Kohlenwasserstoffreste substituiert sein können,
$R_{22}$ -$OH_1$-$NH_2$ oder Acylamino,
$R_{23}$ -$COCH_3$, -$CONH_2$, -CN, -COOH oder -COO-$C_1$-$C_6$-al-kyl bezeichnen und der mit
Q bezeichnete Ring substituiert sein kann.
6. Salze und Komplexe der Azoverbindungen gemäß Anspruch 5.
7. Verwendung von Verbindungen gemäß den Ansprüchen 5 und 6 als Pigmente.

**Claims**

1. Process for the preparation of azo compounds which, in the form of their free acid, correspond to the formula
D-N=N-A (I)
wherein
A ≠ D and
A designates the radical of a coupling component and
D designates a radical which, in one of its tautomeric forms, corresponds to the formulae

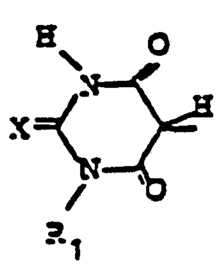 (II) or 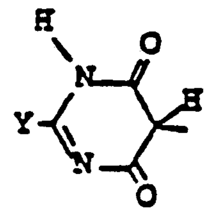 (III)

characterised in that compounds which in one of their tautomeric forms, correspond to the formulae

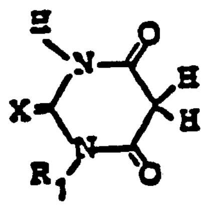 (IV) or. 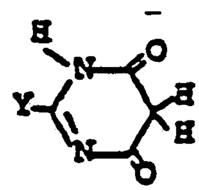 (V)

are reacted, with the addition of at least one equivalent of a base per mol of the compound of the formula (IV) or (V), at a pH value ⩾ 7, in an aqueous medium, with at least

$$\frac{1}{n}$$

mol of a compound of the formula

$$R_2 - (SO_2N_3)_n \qquad (VI)$$

with diazo group transfer to give diazo compounds which, in the form of their free acid, correspond to the formula

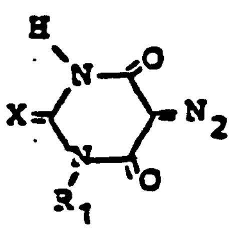 (VII) or 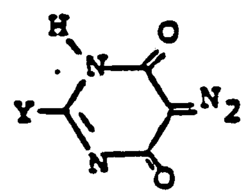 (VIII)

and these are then reacted, without intermediate isolation, with coupling compoments of the formula HA to give azo compounds of the formula (I), wherein
X designates O, =N-CN or $=NR_3$,
Y designates $R_4$, a heterocyclic radical or a radical

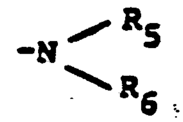

and

$R_1$ designates hydrogen, alkyl, cycloalkyl, aryl or aralkyl, it being possible for the hydrocarbon radicals mentioned for $R_1$ to be substituted;

$R_4$ and $R_6$ have the meanings mentioned above for $R_1$;

$R_3$ and $R_5$ have the meamings mentioned for $R_1$ and furthermore represent an acyl radical, in particular a radical $R_{11}$-CO- or $R_{12}$-$SO_2$-'

$R_2$ represents an alkyl radical or am aryl radical, $R_{11}$ denotes hydrogen, amino, arylamino, alkyl, cycloalkyl, aryl or aralkyl, it being possible for the hydrocarbon radicals to be substituted for example by -OH, halogen, preferably F, Cl, Br, $C_1$-$C_6$-alkyl, $C_1$-$C_6$-alkoxy, -$NO_2$ or -CN, and

$R_{12}$ denotes aryl, for example phenyl or naphthyl, which can be substituted for exampls by -OH, halogen, preferably F, Cl, Br, $C_1$-$C_6$-alkyl, $C_1$-$C_6$-alkoxy, -$NO_2$ or -CN, and a designates 1, 2 or 3.

2. Process according to Claim 1, characterised in that a coupling component of the acetoacetarylde, pyrimidine, pyridine, pyrazole or 2,4-dihydroxyquinoline series is used as the coupling component HA.

3. Process according to Claims 1 and 2, characterised in that 1-2.9 equivalents of the base are added.

4. Process according to Claims 1 to 3, characterised in that the azide of the formula (VI) is used in an excess of 0,5 to 20% preferably 0.5 to 10%.

5. Azo compounds which, in one of their tautomeric structures, correspond to the formulae IX and X

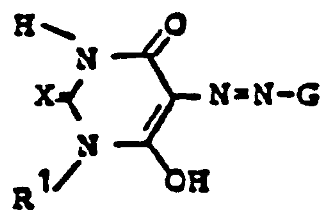

(IX)

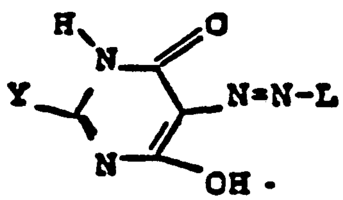

(X)

wherein

G and L represent

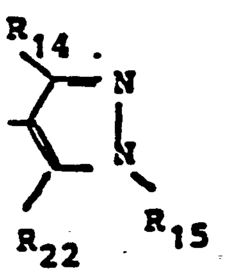

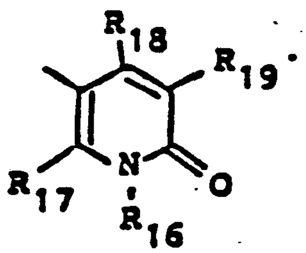

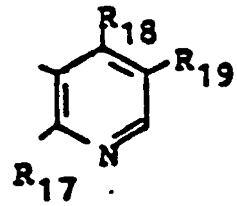

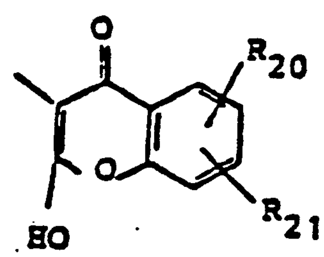

or

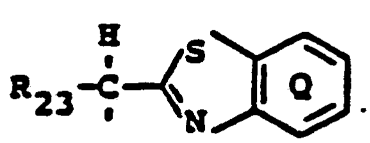

wherein, furthermore,

$R_1$, X and Y have the meanings given in Claim 1,

$R_{14}$ designates hydrogen, alkyl, cycloalkyl, aryl or aralkyl, it being possible for the hydrocarbon radicals

mentioned to be substituted, amino, -COOH, $-CONH_2$, alkoxycarbonyl, $R_{11}$-CO-NH- or $R_{12}-SO_2$-NH-, wherein $R_{11}$ and $R_{12}$ have the meanings given under formula (I),

$R_{15}$ designates hydrogen, alkyl, cycloalkyl, aryl or aralkyl, it being possible for the hydrocarbon radicals mentioned to be substituted,

$R^{16}$ designates hydrogen, alkyl, cycloalkyl, aryl or aralkyl, it being possible for the hydrocarbon radicals mentioned to be substituted,

$R_{17}$ designates -OH, amino, -NHR' or -N(P') wherein R' denotes alkyl, cycloalkyl, aryl or aralkyl, it being possible for the hydrocarbon radicals mentioned to be substituted,

$R_{18}$ designates alkyl, cycloalkyl, aryl or aralkyl, it being possible for the hydrocarbon radicals mentioned to be substituted, -COOH, $R_{17}$ or $R_{,9}$,

$R_{19}$ designates H, -CN, -COOH, $-CONH_2$, -CONHR', $-CON(R')_2$, $\overset{O}{\overset{\|}{-C}}-OR'$, -COR', $-SO_2R'$ or halogen and

$R_{20}$ and $R_{21}$ designate hydrogen, halogen, -OR', $-NH_2$, $-N R')_2$, -NHR', alkyl, cycloalkyl, aryl or aralkyl, it being possible for the hydrocarbon radicals mentioned to be substituted,

$R_{22}$ designates -OH, $-NH_2$ or acylamino,

$R_{23}$ designates $-COCH_3$, $-CONH_2$, -CN, -COOH or -COO-C-$C_6$-alkyl and the ring designates Q can be substituted.

Salts and complexes of the azo compoinds according to Claim 5. Use of compounds according to Claims 5 and 6 as pigments.

**Revendications**

1. Procédé de préparation de composés azoïques qui, à l'état d'acides libres, répondent à la formule

D-N=N-A

dans laquelle A est différent de D, et

A est le reste d'un copulant, et

D est un reste qui, dans l'une de ses formes tautomères, répond aux formules

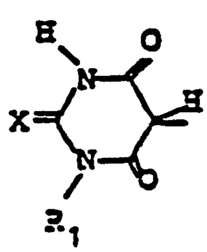 (II) ou 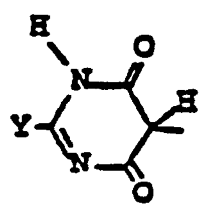 (III)

caractérisé en ce que l'on fait réagir des composés qui, dans l'une de leurs formes tautomères, répondent aux formules

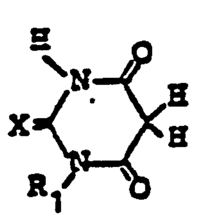 (IV) ou 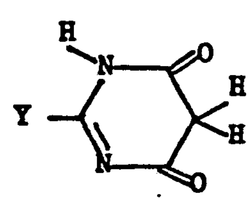 (V)

avec adjonction d'au moins un équivalent d'une base par mole du composé de formule IV ou V, à un pH supérieur ou égal à 7, dans un milieu aqueux, avec au moins $\frac{1}{n}$ mole d'un composé de formule

$R_2 - ( - SO_2N_3)_n$ (VI)

avec transfert des groupes diazo et formation de composés diazoïques qui, à l'état d'acides librer, répondent à la formule

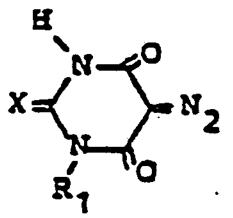 (VII) ou 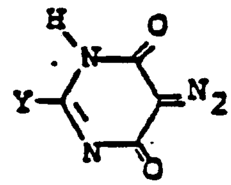 (VIII)

et qu'on fait ensuite réagir, sans isolement intermédiaire, avec des copulants de formule HA, avec formation des composés azoïques de formule I, les symboles des formules ci-dessus ayant les significations suivantes:

X représente O, -N-CN ou $-NR_3$,

Y représente $R_4$, un reste hétérocyclique ou un reste

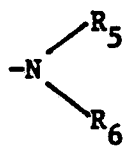 , et

$R_1$ représente l'hydrogène, un groupe alkyls, cycloalkyle, aryle ou aralkyle, les restes hydrocarbonés mentionnés pour $R_1$ pouvant être substitués;

$R_4$, $R_6$ ont les significations, indiquées pour $R_1$.

$R_3$, $R_5$ ont les significations indiquées pour $R_1$ et peuvent en outre représenter un radical acyle, en particulier un radical $R_{11}$-CO- ou $R_{12}$- $SO_2$;

$R_2$ représente un groupe alkyle ou un groupe aryle;

$R_{11}$ représente l'hydrogène, un groupe amino, arylamino, alkyle, cycloalkyle, aryle ou aralkyle, les restes hydrocarbongé pouvant être substitués par exemple par des groupes OH, des halogènes, de préference F, Cl, Br, des groupes alkyle en $C_1$-$C_6$, alcoxy en $C_1$-$C_6$, $-NO_2$, -CH, et

$R_{12}$ représente un groupe aryle, par exemple phényle ou naphtyle, qui peut être substitué par exemple par des groupes OH, des halogènes, de préference, F, C1, Br, des groupes alkyle en $C_1$-$C_6$, alcoxy en $C_1$-$C_6$, $-NO_2$, -CN, et

n est égal à 1, 2 ou 3.

2. Procédé selon la revendication 1, caractérisé en ce que l'on utilise en tant que copulant HA un copulant de la série des acétoacétylerylides, de la pyrimidine, de la pyridine, du pyrazole ou de la 2,4-dihydroxyquinoléine.

3. Procédé selon les revendications 1 et 2, caractérisé en ce que l'on ajonte de 1 à 2,9 équivalents de base.

4. Procédé selon les revendications 1 à 3, caractérisé en ce que l'on met en oeuvre l'azide de formule VI en excès de 0,5 à 20%, de préference de 0,5 à 10%.

5. Composés azoïques qui, dans l'une de leurs structures tautomères, répondent aux formules IX et X

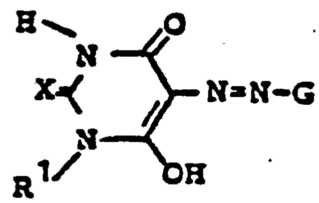

(IX)

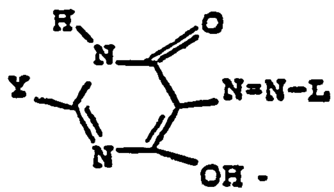

(X)

dans lesquelles
G, L représentent

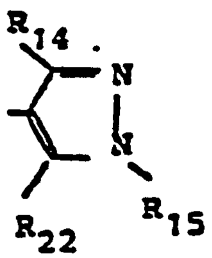

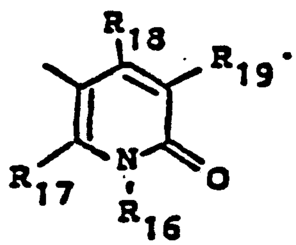

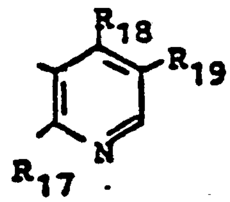

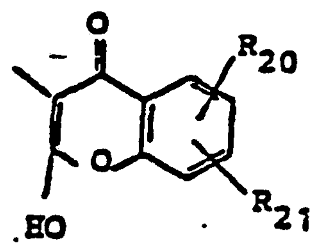

ou 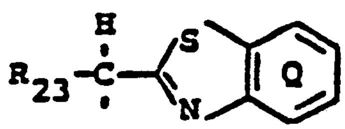

et
$R_1$, X, Y ont les significations indiquées dans la revendication 1, $R_{14}$ représente l'hydrogène, un groupe alkyle, cycloalkyls, aryle, aralkyle, les restes hydrocarbonés mentionnés pouvant être substitués, amino, -COOH, -$CONH_2$, alcomycarbonyle, $R^{11}$-CO-NH- ou $R_{12}$ -$SO_2$-NH-,

$R_{11}$, $R_{12}$ ayant les signifcations indiquées en référence à la formule I,

$R_{15}$ représente l'hydrogène, un groupe alkyle, cycloalkyle, aryle, aralkyle, les restes hydrocarbonés mentionnés pouvant être substitués,

$R_{16}$ représente l'hydrogène, un groupe alkyle, cycloalkyle, aryle, aralkyle, les restes hydrocarbonés mentionnés pouvant être substitués,

$R_{17}$ représente un groupe OH, amino, -NHR', -$N(R')_2$ dans lesquels R' représente un groupe alkyle, cycloalkyle, aryle, aralkyle, les restes hydrocarbonés mentionnés pouvant être substitués,

$R_{18}$ représente un groupe alkyle, cycloalkyle, aryle, aralkyle, les restes hydrocarbonés mentionnés pouvant être substitués, -COOH, $R_{17}$ ou $R_{19}$,

$R_{19}$ représente H, -CN, -COOH, -$CONH_2$, -CONHR', -$CON(R')_2$, $-\underset{\underset{O}{\|}}{C}-OR'$,

-COR', -$SO_2R'$, un halogène, et

$R_{20}$' $R_{21}$ représentent l'hydrogène, des halogènes, des groupes OR', -$NH_2$, -$H(R')_2$, -NHR', alkyle, cycloalkyle, aryle ou aralkyle, les restes hydrocarbonés mentionnés pouvant être substitués,

$R_{22}$ représente un groupe OH $NH_2$ ou acylamino,

$R_{23}$ représente -$COCH_3$, -$CONH_2$, -CN, -COOH ou -COO-alkyle en $C_1$-$C_6$, et le cycle a peut être substitué.

6. Sels et complexes des composés azoïques selon la revendication 5.

7. Utilisation des composés selon les revendications 5 et 6, en tant que pigments.